# FASCICULE DE BREVET EUROPEEN

(11) **EP 3 411 419 B1**
(45) Date de publication et mention de la délivrance du brevet: **01.04.2020**
(21) Numéro de dépôt: 17703100.2
(22) Date de dépôt: 01.02.2017
(51) Int. Cl.: C08F 293/00, B01D 71/34, B01D 71/80, C08L 27/16

(54) **COPOLYMÈRE AMPHIPHILE DIBLOC ET SON UTILISATION POUR LA FABRICATION DE MEMBRANES POLYMÉRIQUES DE FILTRATION**
AMPHIPHILES DIBLOCKCOPOLYMER UND VERWENDUNG DAVON ZUR HERSTELLUNG VON POLYMEREN FILTERMEMBRANEN
AMPHIPHILIC DIBLOCK COPOLYMER AND USE OF SAME FOR PRODUCING POLYMERIC FILTER MEMBRANES

(30) Priorité: 01.02.2016 FR 1650789
(43) Date de publication de la demande: 12.12.2018
(73) Titulaire: Arkema France, 92700 Colombes (FR); Polymem, 31320 Castanet-Tolosan (FR)
(72) Inventeur: KOSAR, Walter Phillip, Chester, Pennsylvania 19465 (US); LORAIN, Olivier, 31120 Portet s/ Garonne (FR); MARCELLINO, Sébastien, 31100 Toulouse (FR); BEAUME, François, 69230 Saint-Genis Laval (FR); GERARD, Pierre, 64230 Denguin (FR)
(74) Mandataire: Casalonga
(86) Numéro de dépôt international: PCT/EP2017/052089
(87) Numéro de publication internationale: WO 2017/134067

(56) Documents cités:
- WO-A1-2010/051150
- WO-A1-2014/139977
- OIKONOMOU EVDOKIA K ET AL: "Swelling of semi-crystalline PVDF by a PMMA-based nanostructured diblock copolymer: Morphology and mechanical properties", POLYMER, vol. 76, 8 septembre 2015 (2015-09-08), pages 89-97, XP029297242, ISSN: 0032-3861, DOI: 10.1016/J.POLYMER.2015.08.055

## Description

La présente invention concerne le domaine des membranes polymères de filtration, notamment de microfiltration ou d'ultrafiltration, destinées au traitement d'effluents.

Plus précisément, la présente invention concerne un copolymère amphiphile dibloc contenant deux blocs, un bloc hydrophile comprenant un copolymère d'acrylate de n-butyle et de méthacrylate d'hydroxyéthyle, et un bloc hydrophobe comprenant du polyméthacrylate de méthyle.

Les membranes de microfiltration (MF) et d'ultrafiltration (UF) sont fréquemment utilisées pour réaliser la purification d'effluents, en particulier de l'eau pour la production d'eau potable ou le traitement des eaux usées avant leur rejet dans l'environnement.

Les membranes polymériques de MF ou d'UF sont généralement fabriquées par une technique dite d'inversion de phase, consistant à former une solution de polymère et d'additif(s), couramment nommée collodion, à mettre cette solution en forme et enfin à provoquer sa coagulation par mise en contact avec une solution de coagulation contenant un non-solvant du polymère. Suite aux échanges de matière se déroulant entre le collodion et le non-solvant, il se produit une séparation de phase liquide/liquide, conduisant à la formation d'une première phase riche en polymère, qui forme la membrane, et une seconde phase pauvre en polymère, qui forme les pores de la membrane. La séparation de phase liquide/liquide peut également être déclenchée par un changement de température.

Les additifs influencent les propriétés de structure et les performances de la membrane. Ils sont notamment utilisés comme porogène, hydrophilisant/hydrophobisant, conducteurs électriques, renforts mécaniques et/ou agents structurateurs. Dans le cas de polymères semi-cristallins, tels que le polyfluorure de vinylidène (PVDF), fréquemment mis en œuvre pour la fabrication de membranes de filtration, les additifs peuvent notamment influencer la formation des cristallites, qui confèrent des propriétés de résistance mécanique et/ou chimique au matériau constituant la membrane.

Les performances recherchées pour une membrane de filtration sont de trois types :
- performance de filtration, en particulier du point de vue de la perméabilité et de la sélectivité ;
- propriétés structurales, conférant notamment à la membrane des propriétés plus ou moins élevées de résistance mécanique et de résistance chimique, en fonction de l'état de surface de la membrane ; et
- résistance en fonctionnement, c'est-à-dire résistance au vieillissement et durabilité des performances de filtration dans le temps.

Cette résistance est définie comme la capacité d'une membrane à conserver ses propriétés de filtration, de surface et de résistance mécanique intactes pendant la filtration d'effluents à traiter, mais également au contact de solutions chimiques de rinçage, telles que des solutions chlorées, systématiquement mises en œuvre pour le nettoyage des membranes entre deux cycles de filtration. Le choix des additifs permet de moduler l'un ou plusieurs de ces types de propriétés de la membrane.

Il a été proposé par l'art antérieur d'utiliser, en tant qu'additifs pour la fabrication de membranes, des copolymères, permettant de combiner à eux seuls les avantages de plusieurs additifs, et plus particulièrement des copolymères à blocs amphiphiles, comme cela a été décrit par exemple dans la demande de brevet WO 2010/051150. Du fait de leur structure particulière, les copolymères à blocs amphiphiles adoptent des conformations spécifiques en solution, et subissent notamment une micellisation en solution. Lors de la mise en œuvre d'un procédé d'inversion de phase pour la fabrication d'une membrane polymérique, du fait de la présence d'eau dans le bain de coagulation, les chaînes hydrophiles de ces copolymères sont attirées vers la surface de la membrane, où elles se ségrégent, conférant alors des propriétés de surface anti-colmatantes particulières aux membranes.

L'augmentation de la durée de vie des membranes polymériques de filtration constitue également un enjeu important. Les membranes sont commercialisées avec des préconisations concernant leur usage, notamment quant à la concentration instantanée maximale en hypochlorite de sodium (NaOCl) libre, et quant aux zones de pH, en filtration et en lavage, recommandées de sorte à augmenter leur durée de vie. Ces limites d'utilisation des membranes sont dues non seulement à la résistance de leur matériau de base, mais également à celle des additifs employés.

Ainsi, il est par exemple connu que la polyvinylpyrrolidone (PVP) est un additif largement utilisé pour la fabrication des membranes polymériques de filtration, notamment pour leur apporter de l'hydrophilie de surface, comme l'indique Fontananova et al., 2006, Desalination 192 : 190-197, malheureusement seulement de manière temporaire. En effet, après plusieurs mois de fonctionnement, l'additif hydrophile est rejeté. L'hydrophilisation n'est donc pas pérenne.

Il est également connu que la PVP est dégradée par des solutions chlorées, largement utilisées pour le lavage des membranes comme cela est décrit par Wienk et al., 1995, J. Polym. Sci. A. Polym. Chem. 33 : 49, ou Qin et al., 2002, Desalination 146 : 307-309, ou encore Rouaix et al., 2006, J. Membr. Sci. 277 : 137-147.

Les membranes comportant de la PVP perdent alors leurs propriétés surfaciques au cours du temps du fait de la dégradation de la PVP, et leur durée de vie en est limitée. Plus particulièrement, le contact des membranes contenant de la PVP avec une solution de NaOCl induit une augmentation de leur perméabilité et une diminution de leur sélectivité. Ces observations résultent d'une augmentation de la taille des pores, ainsi qu'une diminution de leur résistance mécanique comme l'explique Arkhangelsky et al., 2007, J. Membr. Sci. 305 : 176-184.

Il a également été montré que des additifs de type copolymères pouvaient être détruits par des solutions chimiques acides, comme le précise Hester et al., 1999, Macromolecules 32 : 1643-1650. L'état de surface des membranes peut être régénéré, en effectuant une opération de recuit de la membrane, à 90°C pendant 12 heures. Une telle opération de recuit n'est cependant pas compatible avec une utilisation industrielle des membranes, car elle peut être coûteuse, et n'est en outre pas totalement performante. En effet, il a été notamment observé que la résistance à l'absorption de protéines (albumine sérique bovine (BSA)) de membranes après un seul traitement acide de 30 minutes est très nettement inférieure à celle de membranes neuves. La régénération de surface par recuit de la membrane ne permet de recouvrer qu'en partie seulement l'effet protecteur du copolymère vis-à-vis de l'absorption de BSA.

Par ailleurs, la demande de brevet WO 2014/139977 décrit des copolymères à blocs amphiphiles de composition particulière, mis en œuvre en tant qu'additifs pour la fabrication de membranes polymériques de filtration, qui permettent de fabriquer de telles membranes présentant des propriétés de surface améliorées, notamment en termes d'hydrophilie ou de rugosité. En outre, la résistance chimique globale de ces membranes est supérieure à ce qui est observé dans le cadre de l'utilisation d'additifs classiques comme la PVP, et la durabilité des modifications de surface induites par l'additif est augmentée.

En revanche, ces membranes ne présentent pas un comportement complètement satisfaisant concernant les propriétés de perméabilité. En effet, les pertes de perméabilité lors des tests de filtration sur une eau de fleuve sont relativement importantes.

Il serait donc intéressant de fournir un additif pour la fabrication de membranes polymériques de filtration de façon à ce que lesdites membranes présentent des propriétés de perméabilité améliorées.

La présente invention a donc pour objet un copolymère amphiphile dibloc consistant en :
- de 45 à 55% en poids, par rapport au poids du copolymère, d'un bloc hydrophile comprenant au moins un motif issu d'un monomère d'acrylate de n-butyle et au moins un motif issu d'un monomère de méthacrylate d'hydroxyéthyle, et
- de 45 à 55% en poids, par rapport au poids du copolymère, d'un bloc hydrophobe comprenant au moins un motif issu d'un monomère de méthacrylate de méthyle.

La présente invention a également pour objet l'utilisation du copolymère selon l'invention en tant qu'additif pour la fabrication d'une membrane polymérique de filtration.

Un autre objet de la présente invention est une membrane polymérique comprenant au moins une matrice polymérique hydrophobe et au moins un copolymère selon l'invention.

Enfin, la présente invention a pour objet l'utilisation de ladite membrane polymérique comprenant au moins un copolymère selon l'invention pour le traitement d'effluents, tels que l'eau.

D'autres avantages et caractéristiques de l'invention apparaitront plus clairement à l'examen de la description détaillée et des dessins annexés sur lesquels :
- la figure 1A est une représentation schématique d'une membrane de filtration comprenant plusieurs copolymères selon l'invention ;
- la figure 1B est un zoom de la figure 1A représentant des copolymères selon l'invention, consistant en un bloc hydrophile et un bloc hydrophobe ancré dans la membrane de filtration ;
- les figures 2 et 3 sont des graphes illustrant les pertes de perméabilité en fonction du volume filtré de membranes de filtration.

Il est par ailleurs précisé que les expressions « de... à... » utilisées dans la présente description doivent s'entendre comme incluant chacune des bornes mentionnées.

L'invention porte sur un copolymère amphiphile consistant en deux blocs, un bloc hydrophile et un bloc hydrophobe.

On entend par « bloc hydrophile », selon la présente invention, un bloc soluble dans l'eau, dispersible dans l'eau, ou généralement ayant la capacité d'absorber et/ou de relarguer de l'eau.

Le bloc hydrophile du copolymère selon l'invention peut être choisi parmi :
- un copolymère statistique, alterné ou aléatoire, comprenant au moins ledit motif issu d'un monomère hydrophile d'acrylate de n-butyle et au moins ledit motif issu d'un monomère de méthacrylate d'hydroxyéthyle, et éventuellement, un ou plusieurs motifs issus de monomères hydrophiles différents des monomères précités, choisis parmi l'acrylamido 2-méthyl 2- propane sulfonate, l'acide méthacrylique, l'acide acrylique, le diméthylacrylamide, l'acrylate de méthoxyéthyle, l'acide styrène sulfonique, l'acrylate de polyéthylène glycol, le méthacrylate de polyéthylène glycol méthyléther, le méthacrylate de polyéthylène glycol et la vinylpyrrolidone, et
- un copolymère statistique, alterné ou aléatoire, comprenant au moins ledit motif issu d'un monomère hydrophile d'acrylate de n-butyle et au moins ledit motif issu d'un monomère de méthacrylate d'hydroxyéthyle, et éventuellement :
   - un ou plusieurs motifs issus de monomères hydrophobes, et
   - un ou plusieurs autres motifs issus de monomères hydrophiles différents des monomères précités, choisis parmi l'acrylamido 2-méthyl 2- propane sulfonate, l'acide méthacrylique, l'acide acrylique, le diméthylacrylamide, l'acrylate de méthoxyéthyle, l'acide styrène sulfonique, l'acrylate de polyéthylène glycol, le méthacrylate de polyéthylène glycol méthylether, le méthacrylate de polyéthylène glycol et la vinylpyrrolidone.

Avantageusement, ledit bloc hydrophile du copolymère selon l'invention n'est constitué que de copolymère statistique, aléatoire ou alterné, contenant au moins un motif issu d'un monomère d'acrylate de n-butyle et au moins un motif issu d'un monomère de méthacrylate d'hydroxyéthyle.

De manière particulièrement avantageuse, ledit bloc hydrophile est composé d'un copolymère statistique contenant au moins un motif issu d'un monomère d'acrylate de n-butyle et au moins un motif issu d'un monomère de méthacrylate d'hydroxyéthyle.

De préférence, la teneur dudit bloc hydrophile dudit copolymère est de 50% en poids.

De manière préférée, ledit bloc hydrophile comprend de 50 à 99 % en poids, préférentiellement de 70 à 95 % en poids, de motifs issus d'un monomère d'acrylate de n-butyle, par rapport au poids dudit bloc hydrophile, et de 1 à 50 % en poids, préférentiellement de 5 à 30 % en poids de motifs issus d'un monomère de méthacrylate d'hydroxyéthyle, par rapport au poids dudit bloc hydrophile.

Le bloc hydrophile présente de préférence une masse moléculaire moyenne en nombre Mn allant de 5 à 200 kg/mol, et une masse moléculaire moyenne en poids allant de 10 à 400 kg/mol. Son indice de polydispersité va préférentiellement de 1,5 à 5.

On entend par « bloc hydrophobe » selon la présente invention un bloc non soluble ou non dispersible dans l'eau.

Le bloc hydrophobe du copolymère selon l'invention peut être choisi parmi :
- un copolymère statistique, aléatoire ou alterné, comprenant au moins ledit motif issu d'un monomère de méthacrylate de méthyle et au moins un motif issu d'un ou plusieurs autres monomères hydrophobes différents du méthacrylate de méthyle,
- un copolymère statistique, aléatoire ou alterné, comprenant au moins ledit motif issu d'un monomère de méthacrylate de méthyle, et éventuellement :
   - un ou plusieurs autres motifs issus de monomères hydrophobes, différents du méthacrylate de méthyle, et
   - un ou plusieurs motifs issus de monomères hydrophiles, de préférence tels que ceux précités,
   et
- le polyméthacrylate de méthyle.

De préférence, la teneur dudit bloc hydrophobe dudit copolymère est de 50% en poids.

Préférentiellement, ledit bloc hydrophobe du copolymère selon l'invention comprend au moins 50 % en poids de polyméthacrylate de méthyle, plus préférentiellement au moins 70% en poids, encore plus préférentiellement au moins 90% en poids, par rapport au poids dudit bloc hydrophobe.

De manière particulièrement préférée, ledit bloc hydrophobe consiste en le polyméthacrylate de méthyle (PMMA).

Dans le domaine d'application particulier du copolymère à blocs amphiphile selon l'invention pour la fabrication de membranes polymériques, le bloc hydrophobe est avantageusement choisi pour être compatible avec le(s) polymère(s) formant la membrane de filtration. L'homopolymère de méthacrylate de méthyle est notamment compatible avec le PvDF entrant dans la constitution de nombre de membranes.

Préférentiellement, le copolymère amphiphile dibloc consiste en :
- de 45 à 55% en poids, par rapport au poids du copolymère, d'un bloc hydrophile comprenant au moins un motif issu d'un monomère d'acrylate de n-butyle et au moins un motif issu d'un monomère de méthacrylate d'hydroxyéthyle, et
- de 45 à 55% en poids, par rapport au poids du copolymère, d'un bloc hydrophobe comprenant au moins un motif issu d'un monomère de méthacrylate de méthyle.

De manière particulièrement préférée, le copolymère amphiphile dibloc consiste en :
- 50% en poids, par rapport au poids du copolymère, d'un bloc hydrophile comprenant au moins un motif issu d'un monomère d'acrylate de n-butyle et au moins un motif issu d'un monomère de méthacrylate d'hydroxyéthyle, et
- 50% en poids, par rapport au poids du copolymère, d'un bloc hydrophobe comprenant au moins un motif issu d'un monomère de méthacrylate de méthyle.

De manière avantageuse, ledit copolymère est un copolymère (polyacrylate de n-butyle - co - polyhydroxyéthyl méthacrylate - b - bloc hydrophobe), le bloc hydrophobe comprenant au moins 50 % en poids de polyméthacrylate de méthyle, plus préférentiellement au moins 70% en poids, encore plus préférentiellement au moins 90% en poids, par rapport au poids du copolymère, et un mélange de motifs issus de monomères méthacrylates ou acrylates, de préférence de motifs issus d'un monomère d'acrylate de n-butyle et de motifs issus d'un monomère de méthacrylate d'hydroxyéthyle.

Selon un mode de réalisation particulier, le copolymère selon l'invention est un copolymère (polyacrylate de n-butyle - co - polyhydroxyéthyl méthacrylate - b - polyméthacrylate de méthyle), ledit copolymère consistant en 50% en poids de bloc hydrophile et 50% en poids de bloc hydrophobe.

Le copolymère selon l'invention peut contenir des monomères neutralisables et dans certain cas, ces monomères peuvent être pré-neutralisés.

Par « neutralisé », on signifie que le bloc hydrophile du copolymère selon l'invention se trouve complètement ou partiellement sous forme de sel. La neutralisation peut intervenir à n'importe quel moment de la polymérisation, ou durant un procédé de post polymérisation, tel que comprenant des étapes de formulation, mélangeage, ou fabrication de film, pièces, articles ou membranes.

Avantageusement, la masse moléculaire en poids dudit copolymère va de 10 à 400 kg/mol, préférentiellement de 15 à 100 kg/mol, et la masse moléculaire moyenne en nombre va de 7 à 50 kg/mol. Son indice de polydispersité va de préférence de 1,5 à 5.

La présente invention concerne également un procédé d'obtention du bloc hydrophile, du bloc hydrophobe, et du copolymère selon l'invention.

Selon un mode de réalisation particulier de l'invention, ledit bloc hydrophile, ledit bloc hydrophobe, de préférence les deux blocs, sont susceptibles d'être obtenus par un procédé de polymérisation radicalaire contrôlée (PRC), de préférence par polymérisation radicalaire contrôlée par radical libre stable en présence d'au moins une alcoxyamine, de préférence une monoalcoxyamine de formule (I) suivante :

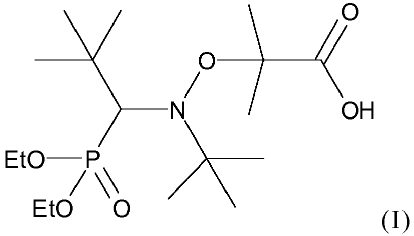

De manière générale, la synthèse des blocs du copolymère selon l'invention peut être réalisée par tout type de polymérisation radicalaire contrôlée, à une température appropriée au type de PRC choisie (selon qu'il s'agisse de la SFRP, de l'ATRP ou de la RAFT) et aux monomères du copolymère choisis.

Plusieurs types de polymérisation radicalaire contrôlée existent selon la nature de l'agent de contrôle utilisé :
- le type utilisant comme agent de contrôle des nitroxides et, par exemple comme initiateur des alcoxyamines, connu en tant que polymérisation radicalaire contrôlée par radical libre stable et sous l'abréviation SFRP (correspondant à la terminologie anglaise « Stable free radical polymerization ») ;
- le type utilisant comme agent de contrôle des complexes métalliques et, par exemple comme initiateur des composés halogénés, connu sous l'abréviation ATRP (correspondant à la terminologie anglaise « Atom Transfer Radical Polymerization ») ;
- le type utilisant des composés soufrés tels que des dithioesters, des trithiocarbamates, des xanthates, des dithiocarbamates, connu sous l'abréviation RAFT (correspondant à la terminologie anglaise « Réversible Addition Fragmentation Transfer »).

Avantageusement, la technique de polymérisation radicalaire utilisée est la polymérisation SFRP réalisée, de préférence, en présence d'au moins une alcoxyamine, ce type de composé assurant à la fois, le rôle d'agent initiateur et d'agent de contrôle.

Des alcoxyamines utilisées avantageusement pour la préparation du copolymère selon l'invention peuvent être choisies parmi les monoalcoxyamines de formule (II) suivante : 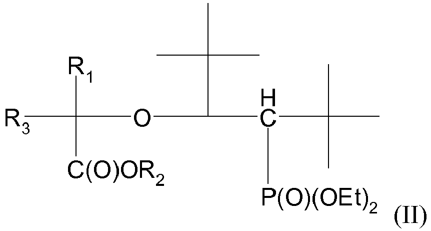 dans laquelle :
- R₁ et R₃, identiques ou différents, représentent, indépendamment l'un de l'autre, un groupe alkyle, linéaire ou ramifié, saturé ou insaturé, en C₁-C₃ ;
- R₂ est choisi parmi un atome d'hydrogène, un métal alcalin, tel que Li, Na, K, un ion ammonium tel que NH₄⁺, NBu₄⁺, NHBu₃⁺, un groupe alkyle, linéaire ou ramifié, saturé ou insaturé, en C₁-C₈, et un groupe phényle.

Un exemple particulier de telle monoalcoxyamine, particulièrement préférée dans le cadre de l'invention, est celle répondant à la formule (I) ci- dessus. Elle est commercialisée par la société ARKEMA sous le nom commercial BlocBuilder®MA.

D'autres alcoxyamines pouvant être utilisées pour la préparation du copolymère selon l'invention sont des polyalcoxyamines issues d'un procédé consistant à faire réagir une ou plusieurs alcoxyamines de formule (II) ci-dessus avec au moins un composé polyinsaturé de formule (III) suivante : 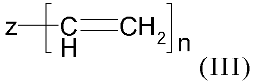 dans laquelle Z représente un groupement aryle ou un groupe de formule Z₁-[X-C(O)]ₙ-, dans laquelle :
- Z₁ représente une structure polyfonctionnelle provenant par exemple d'un composé de type polyol ;
- X est choisi parmi un atome d'oxygène, un atome d'azote porteur d'un groupement carboné ou d'un atome d'oxygène, et un atome de soufre ; et
- n est un nombre entier supérieur ou égal à 2,
en présence ou non de solvant(s), de préférence choisi(s) parmi les alcools comme l'éthanol, les solvants aromatiques, les solvants chlorés, les éthers et les solvants polaires aprotiques, à une température allant, en général, de 0 à 90°C, de préférence de 25 à 80°C, le ratio molaire entre monoalcoxyamine(s) de formule (II) et composé(s) polyinsaturé(s) de formule (III) allant de 1,5 à 1,5^{∗}n, de préférence, de n à 1,25^{∗}n, cette étape étant éventuellement suivie par une étape d'évaporation du ou des éventuels solvants.

Le composé polyinsaturé de formule (III) peut être choisi parmi les vinylbenzènes polyfonctionnels (Z étant alors un groupe aryle) ou parmi les dérivés acryliques polyfonctionnels (Z étant alors un groupe de formule Z₁-[X-C(O)]ₙ-.

De préférence, le composé polyinsaturé est choisi parmi le divinylbenzène, le trivinylbenzène, l'éthylène glycol diacrylate, le 1,3-butanediol diacrylate, le 1,4-butanediol diacrylate, le 1,6-hexanediol diacrylate, le néopentyl glycol diacrylate, le cyclohexane diméthanol diacrylate, le diéthylène glycol diacrylate, le triéthylène glycol diacrylate, le tétraéthylène glycol diacrylate, le dipropylèneglycol diacrylate, le tripropylèneglycol diacrylate, les polyéthylène glycol diacrylates (commercialisés par Sartomer sous les dénominations SR259, SR344, SR610), les hexanediol diacrylates alcoxylés (commercialisés par Sartomer sous les dénominations CD561, CD565, CD560), le bisphénol-A diacrylate, les bisphénol-A diacrylate éthoxylés (commercialisés par Sartomer sous les dénominations SR349, SR601, SR602, CD9038), le triméthylolpropane triacrylate, le pentaérythritol triacrylate, les tris(2-hydroxyéthyl)isocyanurate triacrylate éthoxylés (commercialisés par Sartomer sous les dénominations SR454, SR499, SR502, SR9035, SR415), le glycéryl triacrylate propoxylé (commercialisé par Sartomer sous la dénomination SR9020), les triméthylolpropane triacrylate propoxylés (commercialisés par Sartomer sous les dénominations SR492 et CD501), le pentaérythritol tétraacrylate, le di-triméthylolpropane tétraacrylate, le pentaérythritol tétraacrylate éthoxylé (commercialisé par Sartomer sous la dénomination SR494), le dipentaérythritol pentacrylate, les caprolactones modifiées dipentaérythritol hexaacrylate (commercialisées par Sartomer sous les dénominations Kayarad DCPA20 et DCPA60), et le dipentaérythritol polyacrylate (commercialisé par UCB Chemicals sous la dénomination DPHPA).

Les polyalcoxyamines ainsi produites préférentiellement répondent à la formule (IV) suivante : 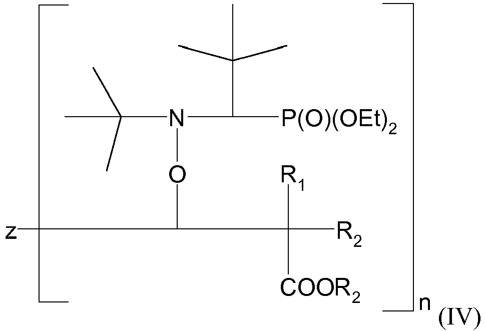 dans laquelle n, R₁, R₂ et R₃, et Z ont les mêmes significations que celles données ci-dessus.

Un exemple particulier de polyalcoxyamine conforme à la définition générale donnée ci-dessus est la polyalcoxyamine de formule (V) suivante :

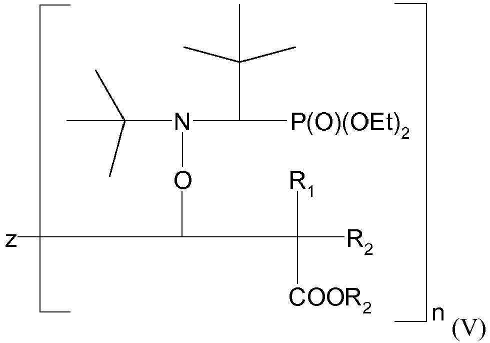

L'alcoxyamine ou polyalcoxyamine peut être introduite dans le milieu de polymérisation à raison de 0,01 à 10%, de préférence 0,1 à 5% en masse, par rapport à la masse de monomère(s) entrant dans la constitution du copolymère selon l'invention.

L'étape de polymérisation pour réaliser les blocs est réalisée à une température appropriée au type de monomères entrant dans la constitution du bloc. Les températures de polymérisation dépendent des monomères constitutifs du bloc. Ainsi, pour initier la polymérisation des monomères acrylates et des monomères méthacrylates à partir d'alcoxyamines telles que définies ci-dessus, on choisira avantageusement une température supérieure à 50°C, de préférence inférieure à 130°C, de préférence allant de 90°C à 125°C.

Le taux de conversion des monomères ou mélange de monomères constitutifs des blocs dépend généralement du temps de fabrication consacré au bloc et est fixé généralement de manière à obtenir un bloc de masse molaire moyenne en nombre prédéterminée.

Entre deux étapes de préparation de deux blocs adjacents et après l'étape de préparation du dernier bloc (c'est-à-dire le bloc d'extrémité), il peut notamment être prévu une étape de polymérisation du(des) monomère(s) résiduel(s) constitutifs du bloc qui vient d'être synthétisé.

Cette polymérisation est réalisée généralement par polymérisation radicalaire classique, par adjonction au milieu dans lequel vient d'être réalisé le bloc, d'un initiateur de polymérisation radicalaire classique choisi généralement parmi les composés peroxydes (tels qu'un composé peroxyde de la gamme Luperox®), les composés persulfates (tels que le persulfate de sodium, le persulfate de potassium, le persulfate d'ammonium), les composés azoïques (tels que le bis-azidoisobutyronitrile, intitulé AiBN, le 2,2'-azobis(2-amidinopropane) dihydrochlorure et les sels métalliques et ammoniacaux de l'acide 4,4'-azobis(4-cyanopentanoïque)), et les composés redox (tels que le couple persulfate (de sodium, potassium ou ammonium/vitamine C, le couple persulfate/métabisulfite de sodium ou de potassium, le couple eau oxygénée/sels de l'ion ferreux, le couple hydroperoxyde de tertiobutyle/sulfoxylate de sodium ainsi que toute autre combinaison possible oxydant(s)/réducteur(s)).

La température de polymérisation de cette étape est choisie, de préférence, de sorte à être inférieure d'au moins 20°C à celle de polymérisation du bloc qui vient d'être polymérisé. Le fait de diminuer la température permet de conserver le bloc précédemment synthétisé sous forme de polymère vivant, sans toutefois continuer la polymérisation de celui-ci.

Le copolymère selon l'invention trouve son application dans de nombreux domaines.

En particulier, la présente invention concerne l'utilisation dudit copolymère en tant qu'additif pour la fabrication d'une membrane polymérique de filtration, telle que de microfiltration ou d'ultrafiltration.

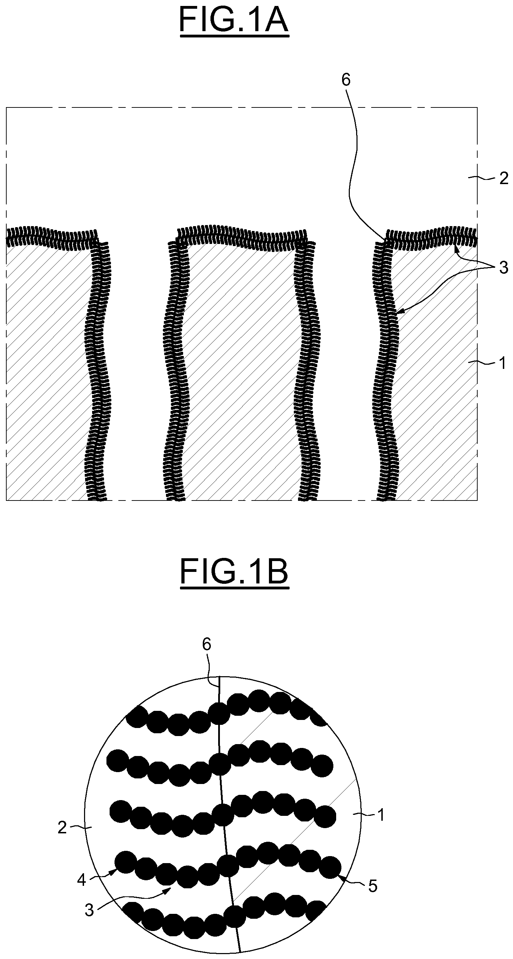

Le copolymère selon l'invention, grâce au bloc hydrophobe, permet un ancrage durable dans une matrice polymérique hydrophobe comme les figures 1A et 1B le montrent.

La figure 1A représente un schéma d'une membrane de filtration 1 hydrophobe filtrant une eau 2. Selon la figure 1B, qui représente un zoom de la figure 1A, ladite membrane 1 comprend un copolymère 3 selon l'invention comprenant un bloc hydrophile 4 et un bloc hydrophobe 5. Ledit bloc hydrophile 4 est repoussé de la membrane, mais grâce à la liaison covalente entre les deux blocs hydrophile 4 et hydrophobe 5, il reste à l'interface 6 de la membrane de filtration 1 lui apportant un caractère hydrophile durable. Contrairement aux additifs classiques qui disparaissent progressivement, le copolymère selon l'invention est bien retenu grâce à son ancrage hydrophobe dans la membrane hydrophobe.

Ainsi, le bloc hydrophile 4 se répartit sur la porosité de la membrane de filtration 1, ce qui permet de lui conférer des propriétés de perméabilité particulièrement avantageuses. En effet, la composition particulière du copolymère 3 selon l'invention permet l'obtention d'une structure stable de ladite membrane et une utilisation efficace du bloc hydrophile 4. Dès lors, une surface interne aux pores hydrophile est générée, permettant d'augmenter le débit d'eau à filtrer et donc la perméabilité de la membrane.

La présente invention concerne également une membrane polymérique, notamment de microfiltration ou d'ultrafiltration, qui comprend au moins une matrice polymérique hydrophobe et au moins un copolymère selon l'invention.

Avantageusement, la matrice polymérique hydrophobe est un polymère fluoré, de préférence un homopolymère de polyfluorure de vinylidène (PVDF). Cet homopolymère fluoré présente de préférence une viscosité à l'état fondu allant de 10² à 10⁴ Pa.s à 230°C et 100 s⁻¹ selon la norme ASTM D3835, publiée en 2008.

Selon un autre mode de réalisation, le PVDF est un copolymère de fluorure de vinylidène (VDF) et d'au moins un autre comonomère choisi parmi le chlorotrifluoroéthylène (CTFE), l'hexafluoropropylène (HFP), le trifluoroéthylène (VF₃), le tétrafluoroéthylène (TFE) et l'éthylène.

Avantageusement, ledit copolymère contient au moins 75% en poids de VDF, de préférence au moins 85% en poids de VDF, ce qui lui confère un caractère thermoplastique. Ces polymères peuvent être obtenus par des méthodes de polymérisation connues comme la polymérisation en solution, en émulsion ou en suspension. Selon un mode de réalisation, le PVDF est préparé par un procédé en émulsion en l'absence d'agent tensioactif fluoré.

Dans un mode de réalisation particulier de l'invention, la membrane comprend de 5 à 99,9 % en poids de ladite matrice polymérique hydrophobe, par rapport au poids de la membrane, et de 0,1 à 95 % en poids du copolymère selon l'invention par rapport au poids de la membrane.

Avantageusement, la membrane comprend de 65 à 99,9% en poids de ladite matrice polymérique hydrophobe par rapport au poids de la membrane.

De préférence, la membrane comprend de 0,1 à 35% en poids du copolymère selon l'invention par rapport au poids de la membrane.

La taille des pores de la membrane de microfiltration ou d'ultrafiltration ainsi fabriquée peut varier de 1 nm à 1 µm. La taille des pores a été déterminée par microscopie électronique à balayage MEB du diamètre des pores débouchant sur la surface externe de la fibre creuse. Cette méthode simple et rapide permet d'estimer la taille des pores allant de 10 à 100 nm.

Cette membrane peut présenter toute géométrie, par exemple plane, spiralée, tubulaire, ou fibres creuses.

Un autre objet de la présente invention est une membrane susceptible d'être obtenue par un procédé particulier.

Avantageusement, ladite membrane polymérique est susceptible d'être obtenue par un procédé d'inversion de phase, mis en œuvre de manière classique en elle-même, à partir d'une solution, dite collodion, contenant au moins une matrice polymérique hydrophobe, au moins un copolymère conforme à l'invention, et éventuellement un ou plusieurs autres additifs, en solution dans un solvant.

Dans un mode de mise en œuvre particulier d'un tel procédé d'inversion de phase, ladite solution comprend :
- de 4,9 à 50 % en poids de ladite matrice polymérique hydrophobe, en particulier de polyfluorure de vinylidène, par rapport au poids de la solution ;
- de 0,1 à 35 % en poids du copolymère selon l'invention, par rapport au poids de la solution ;
- de 15 à 95 % en poids de solvant, par rapport au poids de la solution ;
- éventuellement 0 à 20% en poids d'un ou plusieurs additifs, par rapport au poids de la solution.

Le solvant peut notamment être choisi parmi le diméthylacétamide (DMAc), la N-méthyl-pyrrolidone (NMP), le diméthyl formamide (DMF), la diméthylsulfone (DMSO₂), le diméthylsulfoxide (DMSO), le trialkylphosphate, le tétrahydrofurane (THF), l'acétone, le benzaldéhyde, l'acétophénone, la benzophénone, l'hexaméthylphosphoramide (HMPA), la tétraméthylurée (TMU), le triéthylphosphate (TEP), le triméthylphosphate (TMP), tout autre solvant permettant de solubiliser la matrice polymérique hydrophobe et le copolymère conforme à l'invention, et toute combinaison de tels solvants.

Parmi les additifs, autres que le copolymère conforme à l'invention, pouvant être choisis dans le cadre de l'invention, en fonction des caractéristiques attendues de la membrane, on peut citer :
- des additifs classiques comme le poly(méthacrylate de méthyle) (PMMA), le poly(éthylène glycol) (PEG), la polyvinylpyrrolidone (PVP), des sels inorganiques comme le chlorure de lithium (LiCl), le chlorure de magnésium (MgCl₂), le chlorure de zinc (ZnCl₂) ;
- des non-solvants de la matrice polymérique hydrophobe, tels que l'eau, l'éthanol, le méthanol, ou des combinaisons de ces non-solvants ;
- des oligomères, des polymères, des tensioactifs et/ou des copolymères autres, mais de la même famille, que le copolymère conforme à l'invention ;
- des additifs de type (nano)particules métalliques et/ou céramiques, ainsi que des nanotubes de carbone.

Pour la mise en œuvre de la dernière étape du procédé d'inversion de phase, dans laquelle le collodion mis en forme est mis en contact avec une solution de coagulation et un non-solvant de la matrice polymérique hydrophobe, ce non-solvant, qui peut se trouver sous forme liquide, sous forme vapeur ou sous une forme successivement vapeur puis liquide, peut être de tout type classique en lui-même, notamment de l'eau, du méthanol, de l'éthanol, etc. La solution de coagulation peut en outre contenir un ou plusieurs solvants de la matrice polymérique hydrophobe, préférentiellement identiques à ceux contenus dans le collodion, par exemple de la NMP et de la glycérine en toute proportion , et un ou plusieurs additifs, tels que du LiCl, de la PVP ou du PEG.

L'inversion de phase proprement dite peut autrement être réalisée par traitement thermique, de manière à coaguler la solution initiale, par diminution de la température ou, pour certains systèmes, par augmentation de la température.

Les paramètres opératoires des procédés d'inversion de phase sont classiques en eux-mêmes, et décrits par exemple dans les publications de Penga et al., 2012, Progress in Polymer Science 37: 1401-1424, ou encore de McKelvey et al., 1997, Journal of membrane science 124: 223-232.

A titre d'exemple, la température du collodion peut notamment aller de 10 à 175°C. La température du bain de coagulation peut notamment aller de 5 à 95°C.

L'étape de mise en forme du collodion peut être effectuée par tout moyen classique en lui-même, par exemple, pour la fabrication de fibres creuses, par une filière d'extrusion, à un débit pouvant aller de 0,1 à 72 mL/min.

Dans les modes de réalisation particuliers de la membrane polymérique, dans lesquels ladite membrane est mise en forme de sorte à constituer le corps de fibres creuses, le procédé d'inversion de phase prévoit en outre, de manière classique, la mise en œuvre d'une solution dite liquide interne, permettant de former le volume interne des fibres creuses.

Ce liquide interne contient de préférence un non-solvant de la matrice polymérique hydrophobe, tel que l'eau, du méthanol, de l'éthanol, etc., et, le cas échéant, un ou plusieurs solvants de la matrice polymérique hydrophobe, préférentiellement identiques à ceux contenus dans le collodion, par exemple de la NMP ou de la glycérine en toute proportion, et un ou plusieurs additifs, tels que du LiCl, de la PVP ou du PEG. Sa température peut aller de 5 à 95°C.

Selon un autre aspect, la présente invention concerne l'utilisation d'une membrane polymérique comprenant le copolymère de l'invention pour le traitement d'effluents, en particulier de l'eau.

L'invention est illustrée par les exemples suivants qui ne sont nullement limitatifs.

### Exemples

### 1) Synthèse d'un copolymère selon l'invention

Un matériau polymère comprenant un copolymère diblocs polyacrylate de n-butyle - co - polyhydroxyéthylméthacrylate - b-polyméthacrylate de méthyle-co- polyacrylate de butyle-co-polyhydroxyéthylméthacrylate est préparé.

Le procédé de préparation de ce matériau polymère peut s'appliquer à des modes de polymérisation en masse, en solvant, en émulsion, en suspension. Chaque étape du procédé peut être effectuée dans le même réacteur via un procédé batch, ou dans des réacteurs différents éventuellement selon des procédés semi-continus ou continus.

Les matériaux polymères préparés selon l'exemple exposé ci-dessous sont respectivement analysés par :
- RMN ¹H dans du chloroforme deutéré sur appareil Brucker 400 ;
- chromatographie d'exclusion stérique réalisée à 30°C en utilisant un étalon polystyrène comme référence pour mesurer les masses moléculaires moyennes en nombre.

On utilise l'initiateur et agent de contrôle monoalcoxyamine de formule (I) suivante :

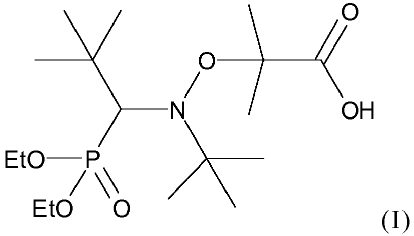

Cet initiateur est commercialisé par Arkema sous le nom BlocBuilder®MA.

### a) Préparation du bloc hydrophile

Dans un réacteur de 20 litres en inox à double enveloppe, équipé d'une soupape de décompression tarée à 10 bars et d'un agitateur du type « double hélice », on introduit 10,8 kg d'acrylate de n-butyle ainsi que 2,7 kg de méthacrylate d'hydroxyéthyle et 490 g de l'amorceur BlocBuilder®MA défini ci- dessus, à température ambiante. Le mélange est dégazé et maintenu sous 3 bars d'atmosphère d'azote puis chauffé jusqu'à atteindre la température de 110°C. L'exothermie de la réaction de polymérisation est contrée grâce à un échangeur thermique à eau glycolée à -25°C. Le mélange est chauffé pendant 425 minutes, jusqu'à l'achèvement de la réaction de polymérisation. Le taux de solide, mesuré par thermobalance, est de 78 %.

Le mélange est ensuite refroidi à 80°C puis mis sous vide à 10 mbar pendant 3 heures afin de retirer les monomères résiduels du milieu réactionnel. 3 kg de toluène sont ensuite ajoutés dans le réacteur. On récupère une solution de polymère dans du toluène par une vanne de fond.

Une mesure d'extrait sec indique qu'une conversion de 76 % a été obtenue, c'est-à-dire que 76 % de l'acrylate de n-butyle et du méthacrylate d'hydroxyéthyle présents dans le mélange initial se sont polymérisés.

Le polymère d'acrylate de n-butyle et d'hydroxy-éthylméthacrylate intermédiaire est caractérisé par chromatographie d'exclusion stérique qui fournit les données suivantes :
- Masse moléculaire moyenne en nombre Mn = 8728 g/mol ;
- Masse moléculaire moyenne en poids Mw = 11646 g/mol ;
- Indice de polydispersité Ip = 1,33.

Cette solution de polymères est utilisée telle quelle pour l'étape b) ci-après.

### b) Préparation du copolymère di-blocs

Le polymère amphiphile diblocs est préparé par polymérisation radicalaire contrôlée selon une méthode classique, dont le procédé de préparation est décrit ci-après.

Après nettoyage au toluène, le même réacteur que celui utilisé à l'étape a) est chargé avec 6,34 kg de la solution obtenue à l'étape a) et 6,42 kg de méthacrylate de méthyle, le mélange initial comportant ainsi 4,82 kg de polyacrylate de butyle et polyhydroxyéthylméthacrylate vivant, 1,52 kg de toluène et 6,42 kg de méthacrylate de méthyle. Le tout est dilué avec 2,23 kg de toluène. Après mise sous azote, le réacteur est chauffé jusqu'à 105°C pendant 90 minutes puis à 120°C pendant 90 minutes avant d'être refroidi en 15 minutes à 50°C.

La conversion finale est de 71 %.

Le mélange est dégazé, mis sous azote, agité puis chauffé jusqu'à 120°C pendant 150 minutes. Le mélange final présente un extrait sec de 71 %. Il est ensuite transféré à travers une ligne de transfert chauffée à 70°C dans une extrudeuse dégazeuse Clextral BC21 possédant 5 puits de dégazage et 12 zones de chauffe, allant de 70°C à l'entrée de l'extrudeuse jusqu'à 180°C au niveau de la filière de type « jonc ». Le copolymère à blocs fondu est ensuite refroidi dans un bac à eau puis granulé.

Ce copolymère présente les caractéristiques suivantes :
- Masse moléculaire moyenne en nombre Mn= 21030 g/mol ;
- Masse moléculaire moyenne en poids Mw= 43400 g/mol ;
- Indice de polydispersité Ip = 2,1 ;

La composition chimique du copolymère est déterminée par RMN ¹H et donne les résultats suivants :
- polyméthacrylate de méthyle : 47 % en poids ;
- polyacrylate de n-butyle: 40 % en poids ;
- polyhydroxyéthylméthacrylate : 12 % en poids ;
- méthacrylate de méthyle < 0,3 % en poids ;
- acrylate de n-butyle < limite de détection ;
- méthacrylate d'hydroxyéthyle < limite de détection ;
- toluène < 0,5 % en poids.

### 2) Fabrication de la membrane polymérique de filtration

Une membrane polymérique de filtration P1 conforme à la présente invention est fabriquée à partir d'un collodion contenant :
- 19,5 % en poids de PVDF, ayant une viscosité à l'état fondu de 5000 Pa.s à 230°C et 100 s⁻¹ selon la norme D3835 ;
- 3 % en poids du copolymère préparé lors de l'étape 1) ;
- 68,5 % en poids de NMP ;
- 8 % en poids de PVPK17 ;
- 1% en poids de PVPK90.

Cette fibre a été extrudée à 11 m/min dans une solution contenant un mélange d'eau et de NMP.

La membrane ainsi fabriquée présente un diamètre externe de 0,75 mm et un diamètre interne de 0,41 mm.

La structure observée au microscope électronique à balayage est mousseuse, sans vacuole et présente deux peaux de filtration, une à l'intérieur et une à l'extérieur contenant des pores de 45-50 nm. La taille des pores a été déterminée par microscopie électronique à balayage. La résistance mécanique de cette fibre est de 6 MPa. La pression d'éclatement interne est de 11 bar.

### 3) Test de colmatage

Un test de colmatage a été conduit. Les pertes de perméabilité et la résistance en fonctionnement ont été évaluées pour deux membranes.

La membrane A est une membrane comparative correspondant à la membrane telle que divulguée dans la demande de brevet WO 2014/139977. Elle présente sur sa surface externe des pores de taille similaire à ceux de la membrane B, décrite ci-après, c'est-à-dire d'environ 45-50 nm. La membrane A comprend le copolymère A1 tel que divulgué dans la demande de brevet WO 2014/139977. La membrane A a été préparée à partir d'un collodion A2 tel que divulgué dans la demande de brevet WO 2014/139977.

La membrane B est la membrane selon l'invention telle qu'elle a été préparée ci-dessus. La membrane B comprend le copolymère B1 tel que préparé ci-dessus. La membrane B a été préparée à partir d'un collodion B2 tel que divulgué ci-dessus.

La composition des deux copolymères est résumée dans le tableau 1 ci-dessous :

**Tableau 1**

| Composition | Copolymère A1 (comp.) | Copolymère B1 (inv.) |
|---|---|---|
| Bloc hydrophile (% en poids) | 25 | 50 |
| Bloc hydrophobe (% en poids) | 75 | 50 |

La composition des deux collodions est résumée dans le tableau 2 ci-dessous :

**Tableau 2**

| Composition | Collodion A2 (comp.) | Collodion B2 (inv.) |
|---|---|---|
| Copolymère A1 (% en poids) | 3 | - |
| Copolymère B1 (% en poids) | - | 3 |
| PVDF (% en poids) | 19,5 | 19,5 |
| NMP (% en poids) | 68,5 | 68,5 |
| PVP (% en poids) | 9 | 9 |

### a) Pertes de perméabilité

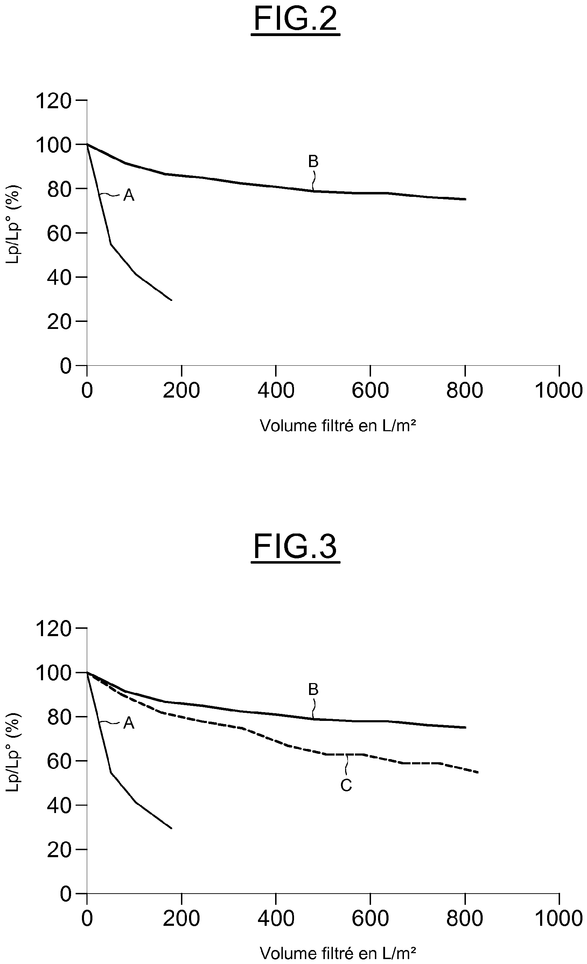

La figure 2 est un graphe illustrant les pertes de perméabilité en fonction du volume filtré des deux membranes de filtration A (courbe A) et B (courbe B).

Le protocole suivant a été suivi : les membranes A et B ont subi en parallèle 10 cycles de filtration-rétrolavage composés d'une heure de filtration à fort flux de perméation (80 l/h.m²) et d'un rétrolavage sous 1,5 bar à l'eau du robinet ultrafiltrée. Le rétrolavage est arrêté lorsque la quantité d'eau récupérée est égale à la moitié de celle produite durant le cycle de filtration. La chute de perméabilité est exprimée comme la baisse de perméabilité après rétrolavage en fonction du volume d'eau filtrée par unité de surface. Comme on peut le voir sur la figure 2, la chute de perméabilité de la membrane A est très rapide alors que celle de la membrane B reste remarquablement plus stable et conserve presque 80% de sa capacité de filtration après 10 cycles de filtration successifs à fort flux de perméation.

La figure 2 montre clairement une chute des performances de filtration concernant la membrane A. En effet, les pertes de perméabilité sont d'environ 70% après seulement 175 litres filtrés par m² de membrane A. En revanche, les pertes de perméabilité ne sont que de 20% après 800 litres filtrés par m² de membrane B.

Ainsi, il est clair que la membrane B présente des propriétés de perméabilité améliorées, tant au niveau des performances qu'au niveau du temps.

### b) Résistance en fonctionnement

Afin d'évaluer la résistance en fonctionnement de la membrane B, ladite membrane a été exposée à des doses de produits chimiques et des cycles de filtration qui simulent en un temps relativement court (2,5 mois), les usures ou fatigues principales que va rencontrer cette membrane pendant sa durée de vie, égale à 10 ans.

Ces tests de fatigue ont été effectués dans les conditions suivantes : la membrane a été exposée à 100 h de filtration d'une solution agressive de NaOCl, à 1000 ppm et à un pH allant de 6 à 7, puis la membrane a subi 100 000 cycles d'une minute comprenant une filtration à 3 bar pendant 30 secondes, suivi de 30 secondes de rétrolavage à 3 bar. Les tests de stabilité de la perméabilité ont alors été effectués à nouveau sur cette membrane dite en fin de vie, appelée ici membrane C.

La figure 3 est un graphe illustrant les pertes de perméabilité en fonction du volume filtré de la membrane de filtration C (courbe C). Les courbes A et B sont rappelées sur la figure 3 à titre de comparaison.

Comme on peut le voir sur la figure 3, la différence de comportement entre la membrane B et la membrane C est faible. Les performances de la membrane C sont en revanche largement supérieures à celles de la membrane A.

Ainsi, il est clair que la membrane selon l'invention présente des propriétés de résistance en fonctionnement améliorées.

## Revendications

1. Copolymère amphiphile dibloc consistant en :
- de 45 à 55% en poids, par rapport au poids du copolymère, d'un bloc hydrophile comprenant au moins un motif issu d'un monomère d'acrylate de n-butyle et au moins un motif issu d'un monomère de méthacrylate d'hydroxyéthyle, et
- de 45 à 55% en poids, par rapport au poids du copolymère, d'un bloc hydrophobe comprenant au moins un motif issu d'un monomère de méthacrylate de méthyle.

2. Copolymère selon la revendication 1, **caractérisé en ce que** la teneur dudit bloc hydrophile dudit copolymère est de 50%en poids.

3. Copolymère selon l'une quelconque des revendications précédentes, **caractérisé en ce que** ledit bloc hydrophile est composé d'un copolymère statistique contenant au moins un motif issu d'un monomère d'acrylate de n-butyle et au moins un motif issu d'un monomère de méthacrylate d'hydroxyéthyle.

4. Copolymère selon l'une quelconque des revendications précédentes, **caractérisé en ce que** ledit bloc hydrophile comprend :
- de 50 à 99 % en poids, préférentiellement de 70 à 95 % en poids, de motifs issus d'un monomère d'acrylate de n-butyle, par rapport au poids dudit bloc hydrophile, et
- de 1 à 50 % en poids, préférentiellement de 5 à 30 % en poids de motifs issus d'un monomère de méthacrylate d'hydroxyéthyle, par rapport au poids dudit bloc hydrophile.

5. Copolymère selon l'une quelconque des revendications précédentes, **caractérisé en ce que** ledit bloc hydrophobe comprend au moins 50 % en poids de polyméthacrylate de méthyle, préférentiellement au moins 70% en poids, plus préférentiellement au moins 90% en poids, par rapport au poids dudit bloc hydrophobe.

6. Copolymère selon l'une quelconque des revendications précédentes, **caractérisé en ce que** ledit copolymère est un copolymère (polyacrylate de n-butyle - co - polyhydroxyéthyl méthacrylate - b - bloc hydrophobe), le bloc hydrophobe comprenant au moins 50 % en poids de polyméthacrylate de méthyle, préférentiellement au moins 70% en poids, plus préférentiellement au moins 90% en poids, par rapport au poids du copolymère, et un mélange de motifs issus de monomères méthacrylates ou acrylates, de préférence de motifs issus d'un monomère d'acrylate de n-butyle et de motifs issus d'un monomère de méthacrylate d'hydroxyéthyle.

7. Copolymère selon l'une quelconque des revendications précédentes, **caractérisé en ce que** la masse moléculaire en poids dudit copolymère va de 10 à 400 kg/mol.

8. Utilisation d'un copolymère tel que défini à l'une quelconque des revendications 1 à 7 en tant qu'additif pour la fabrication d'une membrane polymérique de filtration.

9. Membrane polymérique, **caractérisée en ce qu'**elle comprend au moins une matrice polymérique hydrophobe et au moins un copolymère tel que défini à l'une quelconque des revendications 1 à 7.

10. Membrane polymérique selon la revendication 9, **caractérisée en ce que** la matrice polymérique hydrophobe est un polymère fluoré, de préférence un homopolymère de polyfluorure de vinylidène.

11. Membrane polymérique selon la revendication 9 ou 10, **caractérisée en ce qu'**elle comprend de 5 à 99,9 % en poids de ladite matrice polymérique hydrophobe, par rapport au poids de la membrane, et de 0,1 à 95 % en poids dudit copolymère par rapport au poids de la membrane.

12. Membrane polymérique selon l'une quelconque des revendications 9 à 11, susceptible d'être obtenue par un procédé d'inversion de phase, à partir d'une solution comprenant au moins une matrice polymérique hydrophobe, au moins un copolymère tel que défini à l'une quelconque des revendications 1 à 7, et éventuellement un ou plusieurs autres additifs, en solution dans un solvant.

13. Membrane polymérique selon la revendication 12, susceptible d'être obtenue par ledit procédé d'inversion de phase à partir d'une solution comprenant :
- de 4,9 à 50 % en poids de ladite matrice polymérique hydrophobe, en particulier de polyfluorure de vinylidène, par rapport au poids de la solution ;
- de 0,1 à 35 % en poids dudit copolymère, par rapport au poids de la solution ;
- de 15 à 95 % en poids de solvant, par rapport au poids de la solution ;
- éventuellement 0 à 20% en poids d'un ou plusieurs additifs, par rapport au poids de la solution.

14. Utilisation d'une membrane polymérique telle que définie à l'une quelconque des revendications 9 à 13 pour le traitement d'effluents, en particulier de l'eau.

## Patentansprüche

1. Amphiphiles Diblockcopolymer, bestehend aus:
- 45 bis 55 Gew.-%, bezogen auf das Gewicht des Copolymers, eines hydrophilen Blocks, der mindestens eine von einem n-Butylacrylat-Monomer abgeleitete Einheit und mindestens eine von einem Hydroxyethylmethacrylat-Monomer abgeleitete Einheit umfasst, und
- 45 bis 55 Gew.-%, bezogen auf das Gewicht des Copolymers, eines hydrophoben Blocks, der mindestens eine von einem Methylmethacrylat-Monomer abgeleitete Einheit umfasst.

2. Copolymer nach Anspruch 1, **dadurch gekennzeichnet, dass** der Gehalt des hydrophilen Blocks des Copolymers 50 Gew.-% beträgt.

3. Copolymer nach einem der vorhergehenden Ansprüche, **dadurch gekennzeichnet, dass** der hydrophile Block aus einem statistischen Copolymer, das mindestens eine von einem n-Butylacrylat, Monomer abgeleitete Einheit und mindestens eine von einem Hydroxyethylmethacrylat-Monomer abgeleitete Einheit enthält, besteht.

4. Copolymer nach einem der vorhergehenden Ansprüche, **dadurch gekennzeichnet, dass** der hydrophile Block
- 50 bis 99 Gew.-%, vorzugsweise 70 bis 95 Gew.-%, von einem n-Butylacrylat-Monomer abgeleitete Einheiten, bezogen auf das Gewicht des hydrophilen Blocks, und
- 1 bis 50 Gew.-%, bevorzugt 5 bis 30 Gew.-%, von einem Hydroxyethylmethacrylat-Monomer abgeleitete Einheiten, bezogen auf das Gewicht des hydrophilen Blocks,
umfasst.

5. Copolymer nach einem der vorhergehenden Ansprüche, **dadurch gekennzeichnet, dass** der hydrophobe Block mindestens 50 Gew.-% Polymethylmethacrylat, bevorzugt mindestens 70 Gew.-%, weiter bevorzugt mindestens 90 Gew.-%, bezogen auf das Gewicht des hydrophoben Blocks, umfasst.

6. Copolymer nach einem der vorhergehenden Ansprüche, **dadurch gekennzeichnet, dass** es sich bei dem Copolymer um ein (Poly-n-butylacrylat-co-poly-hydroxyethylmethacrylat-b-hydrophober Block)-Co-polymer handelt, wobei der hydrophobe Block mindestens 50 Gew.-% Polymethylmethacrylat, bevorzugt mindestens 70 Gew.-%, weiter bevorzugt mindestens 90 Gew.-%, bezogen auf das Gewicht des Copolymers, und eine Mischung von Einheiten, die sich von Methacrylat- oder Acrylat-Monomeren ableiten, vorzugsweise von Einheiten, die sich von einem n-Butylacrylat-Monomer ableiten und von Einheiten, die sich von einem Hydroxyethyl-methacrylat-Monomer ableiten, umfasst.

7. Copolymer nach einem der vorhergehenden Ansprüche, **dadurch gekennzeichnet, dass** die gewichtsmittlere Molmasse des Copolymers im Bereich von 10 bis 400 kg/mol liegt.

8. Verwendung eines Copolymers gemäß einem der Ansprüche 1 bis 7 als Additiv zur Herstellung einer polymeren Filtrationsmembran.

9. Polymere Membran, **dadurch gekennzeichnet, dass** sie mindestens eine hydrophobe Polymermatrix und mindestens ein Copolymer gemäß einem der Ansprüche 1 bis 7 umfasst.

10. Polymere Membran nach Anspruch 9, **dadurch gekennzeichnet, dass** es sich bei der hydrophoben Polymermatrix um ein Fluorpolymer, vorzugsweise ein Polyvinylidenfluorid-Homopolymer, handelt.

11. Polymere Membran nach Anspruch 9 oder 10, **dadurch gekennzeichnet, dass** sie 5 bis 99,9 Gew.-% der hydrophoben Polymermatrix, bezogen auf das Gewicht der Membran, und 0,1 bis 95 Gew.-% des Copolymers, bezogen auf das Gewicht der Membran, umfasst.

12. Polymere Membran nach einem der Ansprüche 9 bis 11, die durch ein Phaseninversionsverfahren aus einer Lösung, die mindestens eine hydrophobe Polymermatrix, mindestens ein Copolymer gemäß einem der Ansprüche 1 bis 7 und gegebenenfalls ein oder mehrere andere Additive in Lösung in einem Lösungsmittel umfasst, erhältlich ist.

13. Polymere Membran nach Anspruch 12, die durch das Phaseninversionsverfahren aus einer Lösung, die
- 4,9 bis 50 Gew.-% der hydrophoben Polymermatrix, insbesondere von Polyvinylidenfluorid, bezogen auf das Gewicht der Lösung,
- 0,1 bis 35 Gew.-% des Copolymers, bezogen auf das Gewicht der Lösung,
- 15 bis 95 Gew.-% Lösungsmittel, bezogen auf das Gewicht der Lösung,
- gegebenenfalls 0 bis 20 Gew.-% eines oder mehrerer Additive, bezogen auf das Gewicht der Lösung, umfasst, erhältlich ist.

14. Verwendung einer polymeren Membran gemäß einem der Ansprüche 9 bis 13 zur Behandlung von Austragsströmen, insbesondere von Wasser.

## Claims

1. Amphiphilic diblock copolymer consisting of:
- from 45 to 55% by weight, relative to the weight of the copolymer, of a hydrophilic block comprising at least one unit derived from an n-butyl acrylate monomer and at least one unit derived from a hydroxyethyl methacrylate monomer, and
- from 45 to 55% by weight, relative to the weight of the copolymer, of a hydrophobic block comprising at least one unit derived from a methyl methacrylate monomer.

2. Copolymer according to Claim 1, **characterized in that** the content of said hydrophilic block of said copolymer is 50% by weight.

3. Copolymer according to any one of the preceding claims, **characterized in that** said hydrophilic block is composed of a statistical copolymer containing at least one unit derived from an n-butyl acrylate monomer and at least one unit derived from a hydroxyethyl methacrylate monomer.

4. Copolymer according to any one of the preceding claims, **characterized in that** said hydrophilic block comprises:
- from 50 to 99% by weight, preferentially from 70 to 95% by weight, of units derived from an n-butyl acrylate monomer, relative to the weight of said hydrophilic block, and
- from 1 to 50% by weight, preferentially from 5 to 30% by weight, of units derived from a hydroxyethyl methacrylate monomer, relative to the weight of said hydrophilic block.

5. Copolymer according to any one of the preceding claims, **characterized in that** said hydrophobic block comprises at least 50% by weight of polymethyl methacrylate, preferentially at least 70% by weight, more preferentially at least 90% by weight, relative to the weight of said hydrophobic block.

6. Copolymer according to any one of the preceding claims, **characterized in that** said copolymer is a (poly-n-butyl acrylate - co - polyhydroxyethyl methacrylate - b - hydrophobic block) copolymer, the hydrophobic block comprising at least 50% by weight of polymethyl methacrylate, preferentially at least 70% by weight, more preferentially at least 90% by weight, relative to the weight of the copolymer, and a mixture of units derived from methacrylate or acrylate monomers, preferably units derived from an n-butyl acrylate monomer and units derived from a hydroxyethyl methacrylate monomer.

7. Copolymer according to any one of the preceding claims, **characterized in that** the weight-average molecular weight of said copolymer ranges from 10 to 400 kg/mol.

8. Use of a copolymer as defined in any one of Claims 1 to 7 as additive for the manufacture of a polymeric filtration membrane.

9. Polymeric membrane, **characterized in that** it comprises at least one hydrophobic polymeric matrix and at least one copolymer as defined in any one of Claims 1 to 7.

10. Polymeric membrane according to Claim 9, **characterized in that** the hydrophobic polymeric matrix is a fluoropolymer, preferably a polyvinylidene fluoride homopolymer.

11. Polymeric membrane according to Claim 9 or 10, **characterized in that** it comprises from 5 to 99.9% by weight of said hydrophobic polymeric matrix, relative to the weight of the membrane, and from 0.1 to 95% by weight of said copolymer relative to the weight of the membrane.

12. Polymeric membrane according to any one of Claims 9 to 11, capable of being obtained by a phase inversion process, from a solution comprising at least one hydrophobic polymeric matrix, at least one copolymer as defined in any one of Claims 1 to 7 and optionally one or more other additives, in solution in a solvent.

13. Polymeric membrane according to Claim 12, capable of being obtained by said phase inversion process from a solution comprising:
- from 4.9 to 50% by weight of said hydrophobic polymeric matrix, in particular of polyvinylidene fluoride, relative to the weight of the solution;
- from 0.1 to 35% by weight of said copolymer, relative to the weight of the solution;
- from 15 to 95% by weight of solvent, relative to the weight of the solution;
- optionally from 0 to 20% by weight of one or more additives, relative to the weight of the solution.

14. Use of a polymeric membrane as defined in any one of Claims 9 to 13, for the treatment of effluents, in particular water.
